# FASCICULE DE BREVET EUROPEEN

(11) **EP 3 114 055 B1**
(45) Date de publication et mention de la délivrance du brevet: **22.06.2022**
(21) Numéro de dépôt: 15714559.0
(22) Date de dépôt: 03.03.2015
(51) Int. Cl.: B65G 47/14, B65G 47/256

(54) **PROCÉDÉ ET INSTALLATION DE FOURNITURE ORIENTÉE DE FLANS.**
VERFAHREN UND ANLAGE ZUM AUSGERICHTETEN ZUFÜHREN VON ZUSCHNITTEN
METHOD AND INSTALLATION FOR ORIENTED FEED OF BLANKS

(30) Priorité: 03.03.2014 FR 1451701
(43) Date de publication de la demande: 11.01.2017
(73) Titulaire: La Monnaie de Paris, 75006 Paris (FR)
(72) Inventeur: GUILLEMENET Jérôme, 33610 Canejan (FR); PAGNAC Michel, 33350 Sainte Terre (FR); SAIGNES Frédéric, 33380 Mios (FR); CUREAU Yann, 33400 Talence (FR)
(74) Mandataire: Derambure Conseil
(86) Numéro de dépôt international: PCT/FR2015/050518
(87) Numéro de publication internationale: WO 2015/132525

(56) Documents cités:
- DE-A1-102006 039 091
- JP-A- H02 221 014
- US-A- 3 707 217
- US-A- 4 709 798
- US-A- 4 878 575
- US-A- 5 924 546
- US-A- 5 954 185

## Description

L'invention concerne le domaine , des procédés et des installations de fourniture orientée de flans.

Ces flans peuvent en particulier être par exemple des pièces de monnaie, fabriquées ou en cours de fabrication, ou bien des parties de pièces de monnaie, fabriquées ou en cours de fabrication, destinées par exemple à être assemblées avec d'autres parties de pièces de monnaie pour former des pièces de monnaie. Ces flans peuvent encore être des jetons ou des médailles, ou des parties de jetons ou parties de médailles, fabriquées ou en cours de fabrication, destinées par exemple à être assemblées pour former des jetons ou médailles.

De tels flans sont ainsi du type s'étendant sensiblement selon un plan d'extension au moyen de deux faces d'extension opposées selon une direction d'épaisseur perpendiculaire au plan d'extension.

Les deux faces d'extension présentent usuellement des caractéristiques visuelles, physiques ou chimiques différentes et il est souhaitable, par exemple au cours d'un procédé de fabrication de pièces de monnaie, de jetons ou de médailles, d'être en mesure de fournir des flans orientés c'est-à-dire des flans présentant une face d'extension définie, choisie parmi les deux faces d'extension des flans, sur un côté d'observation d'un plan d'avancement selon lequel lesdits flans se déplacent.

Il est connu de l'art antérieur différentes solutions visant à fournir des objets orientés selon une orientation relative souhaitée.

Ainsi par exemple le document US4884678, décrit un procédé et une installation d'alimentation permettant la fourniture orientée de bouchons, par exemple de bouchons de bouteilles plastiques creux sur un de leur côtés de façon à pouvoir être fixés sur le goulot d'une bouteille. De tels bouchons présentent des caractéristiques visuelles et physiques différentes sur certaines de leurs faces qui permettent de différentier leur orientation relative au moyen d'un détecteur. Ainsi, dans le procédé du document US4884678 :
- on a à disposition des bouchons et on alimente un bol avec ces bouchons,
- on déplace les bouchons les uns à la suite des autres selon une direction d'avancement à l'endroit d'une zone de tri du bol,
- on détecte sur un côté d'observation, au fur et à mesure du déplacement des bouchons à l'endroit de la zone de tri du bol, la caractéristique visuelle ou physique de la face de chacun des bouchons située du côté d'observation, et ainsi on détermine si le bouchon est dans une orientation relative souhaitée ou dans une orientation relative non souhaitée,
- on dirige les bouchons se trouvant dans une orientation relative souhaitée vers une sortie du bol et on les évacue en vue d'une utilisation ultérieure.
- on dirige les bouchons se trouvant dans une orientation relative non souhaitée vers l'intérieur du bol par un jet d'air comprimé.

Le bol du document US4884678 est incliné par rapport à l'axe vertical et les bouchons employés sont tels que leur dimension d'épaisseur est de l'ordre de leur dimension transversale, sorte que lorsque l'on dirige un bouchon se trouvant dans une orientation relative non souhaitée vers l'intérieur du bol par un jet d'air comprimé, la probabilité que le bouchon pivote sur lui-même, sous l'effet combiné du jet d'air comprimé, de la gravité et des rebonds contre le bol, pour se trouver dans une orientation différente de son orientation précédente, est élevée. Le document EP1127834 décrit un procédé et une installation destinés également à la fourniture orientée de bouchons, par exemple de bouchons de bouteilles plastiques creux sur un de leur côtés de façon à pouvoir être fixés sur le goulot d'une bouteille. Dans le procédé de ce document, on dirige en permanence un jet d'air comprimé sur une face des bouchons de sorte que, si la face frappée par le jet d'air comprimé comporte un creux, la pression d'air et l'orientation du jet dans le creux du bouchon amène ce bouchon à décoller du fond de bol et, possiblement, pivoter sur lui-même, sous l'effet combiné du jet d'air comprimé, de la gravité et des rebonds contre le bol, pour se trouver à nouveau sur le fond de bol dans une orientation différente de son orientation précédente.

Le document US4709798 décrit un bol rotatif comprenant une rampe inclinée stationnaire transportant des articles depuis un fond du bol jusqu'à un bord supérieur. Les articles mal positionnés sont frappés par un jet d'air comprimé pour les diriger hors de la rampe.

Le document US5954185 divulgue un procédé de fourniture orientée de flans selon le préambule de la revendication 1, et une installation de fourniture orientée de flans selon le préambule de la revendication 6.

J De tels procédés et installations présentent cependant des inconvénients importants si l'on souhaite les employer pour la fourniture orientée de flans, lesdits flans étant du type décrit ci-avant.

En effet, les flans s'étendent sensiblement selon un plan d'extension et la dimension d'épaisseur des flans est donc sensiblement inférieure à leur dimension transversale. Ces derniers présentent ainsi deux orientations très stables sur un fond de bol, respectivement avec l'une ou l'autre de leurs faces d'extension placée à plat contre le bol. La mise en œuvre du procédé du document US4884678 est ainsi peu efficace car l'effet combiné du jet d'air comprimé, de la gravité et des rebonds contre le bol est trop faible pour qu'un flan passe d'une orientation à l'autre avec une probabilité importante.

En outre, les flans ne présentent en général pas de creux important sur un de leurs côtés ce qui ne permet pas d'utiliser le procédé du document EP1127834, ce dernier n'étant plus à même de discriminer selon l'orientation des flans.

Il existe ainsi un besoin pour un procédé et une installation permettant la fourniture orientée de flans, de façon rapide, efficace et simple d'utilisation et de fabrication.

L'invention est exposée dans les revendications 1 et 6 du jeu de revendications joint.

On décrit maintenant brièvement les figures des dessins.
La figure 1 est une vue, en perspective, de dessus, d'une réalisation possible d'une installation 1 de fourniture orientée de flans 2 selon l'invention.
Les figures 2A et 2B sont des vues en perspective de flans 2 du type fourni par un procédé de fourniture orientée de flans et une installation de fourniture orientée de flans selon l'invention.
La figure 3 est une vue, en perspective, de dessus, de l'installation 1 de fourniture orientée de flans 2 de la figure 1, dans laquelle le dispositif d'alimentation du bol avec des flans a été masqué pour illustrer plus particulièrement l'intérieur de l'installation.
La figure 4A est une vue, en coupe, selon la ligne IV-IV de la figure 3, par un plan vertical de l'installation 1 de fourniture orientée de flans 2 de la figure 3 passant par l'axe de rotation du bol et le dispositif de détection du bol.
Les figures 4B et 4C sont des agrandissements partiels et à plus grande échelle de la figure 4A.
La figure 5 est une vue, en coupe, selon la ligne V-V de la figure 3, par un plan horizontal de l'installation 1 de fourniture orientée de flans 2 de la figure 3 passant entre le fond de bol et la paroi supérieure annulaire du bol.
La figure 6 est une vue, en perspective, d'un agrandissement partiel et à plus grande échelle de la figure 5.
Les figures 7A et 7B sont des vues en perspectives de deux variantes de réalisation d'un dispositif de déflexion selon l'invention.

Ci-après un exposé détaillé de plusieurs modes de réalisation de l'invention assorti d'exemples et de référence aux dessins.

Sur les différentes figures, les mêmes références désignent des éléments identiques ou similaires.

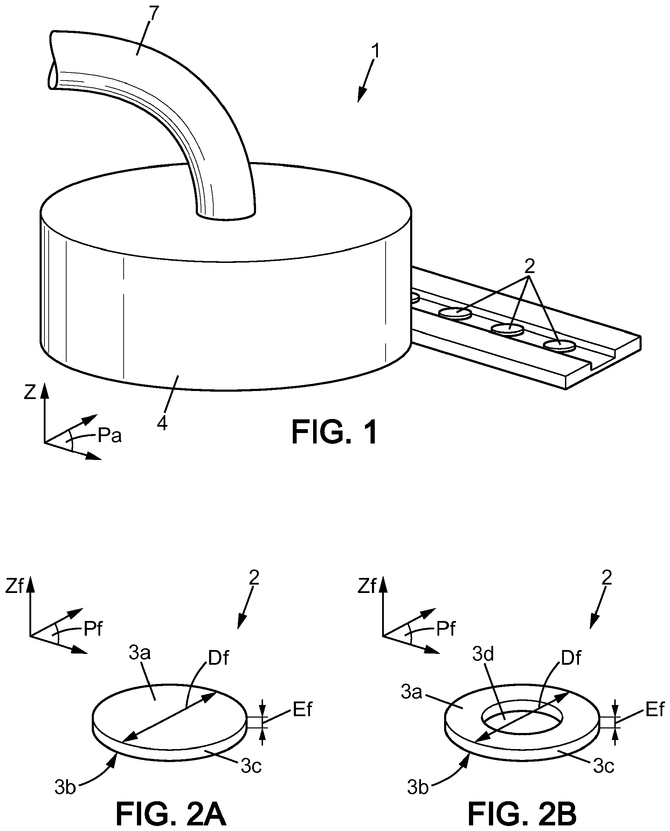

Les figures 1, 3, 4A et 5 illustrent un mode de réalisation d'une installation 1 de fourniture orientée de flans 2 selon l'invention.

Les flans 2 s'étendent sensiblement selon un plan d'extension Pf au moyen, pour chacun, d'une première face d'extension 3a et d'une seconde face d'extension 3b. La première face d'extension 3a et la seconde face d'extension 3b sont opposées selon une direction d'épaisseur Zf du flan, perpendiculaire au plan d'extension Pf. La première face d'extension 3a et la seconde face d'extension 3b sont reliées par une face périphérique 3c s'étendant selon la direction d'épaisseur Zf sur une périphérie du flan 2.

La référence numérique 3 désigne les faces d'extension 3a, 3b, de façon générique.

Chaque flan 2 présente ainsi une épaisseur Ef - un écartement entre la première face d'extension 3a et la seconde face d'extension 3b selon la direction d'épaisseur Zf - sensiblement inférieure à une dimension maximale Df de la première face d'extension 3a et de la seconde face d'extension 3b.

La première face d'extension 3a et la seconde face d'extension 3b présentent respectivement des caractéristiques visuelles, physiques ou chimiques différentes. Parmi les caractéristiques visuelles, physiques ou chimiques d'une face d'extension 3, on pourra faire référence à une ou une combinaison parmi une couleur, une absorbance, une réflectance, une transmittance, une forme générale, un motif embossé, un motif en surélévation un motif en creux, une composition chimique, une élasticité, une fréquence de résonance mécanique, une conductivité électrique, une résistance électrique, une capacité électrique, une inductance, une magnétisation, une perméabilité magnétique, un moment magnétique, de ladite face d'extension 3 ou d'une portion de ladite face d'extension 3.

Ainsi par exemple, la première face d'extension 3a peut présenter une couleur, un motif, imprimé ou frappé, une composition chimique et/ou une conductivité électrique différente de la seconde face d'extension 3b.

A titre d'exemple un flan 2 peut comporter un colaminé UN25 / UZ20N5. La première face d'extension 3a peut par exemple être en UN25 et la seconde face d'extension 3b être en UZ20N5. La première face d'extension 3a est ainsi de couleur « blanche » ou argentée et la seconde face d'extension 3b est alors de couleur « jaune » ou dorée. La première face d'extension 3a et la seconde face d'extension 3b présentent donc une couleur, une composition chimique et une conductivité différentes l'une de l'autre. Dans cet exemple, les formes des deux faces d'extension sont identiques. Dans d'autres modes de réalisation une caractéristique uniquement, parmi les caractéristiques visuelles, physiques et chimiques, pourra différer entre la première face d'extension 3a et la seconde face d'extension 3b.

Les figures 2A et 2B illustrent des exemples de tels flans 2.

Les flans 2 peuvent en particulier comporter un ou plusieurs trous 3d. On comprend ainsi que par « flan », on entend des disques mais aussi des couronnes. De façon générale, le terme « flan » est ainsi employé ici comme désignant un objet ayant une épaisseur sensiblement inférieure à une dimension maximale d'une face d'extension 3a, 3b.

Dans le cas où les flans employés comportent un trou 3d l'installation pourra être amené à être adaptée en conséquence. Ainsi en particulier, la position d'un capteur de proximité 16 et d'un dispositif de sollicitation 24 tels que détaillés ci-avant pourra être adaptée pour éviter une interaction avec le trou 3d des flans 2.

En outre, les flans 2 sont ici représentés avec un axe de symétrie radial et une forme générale de disque ou annulaire, mais l'installation 1 peut également permettre la fourniture orientée de flans 2 ne présentant pas une symétrie radiale mais par exemple une forme générale polygonale ou anguleuse.

Comme cela est visible en particulier sur les figures 1, 3, 4A et 5, l'installation 1 de fourniture orientée de flans 2 comporte un bol 4.

Dans le mode de réalisation des figures 1, 3, 4A et 5, le bol 4 comprend en particulier une paroi périphérique cylindrique 5, s'étendant selon un axe vertical Z depuis une extrémité inférieure 5a jusqu'à une extrémité supérieure 5b.

En entend ici par « axe vertical », un axe d'extension de la paroi périphérique cylindrique 5. Dans un mode de réalisation, l'installation 1 peut être disposée de telle sorte que l'axe vertical Z soit proche d'un axe de pesanteur selon lequel s'exerce la force de gravité. Dans un autre mode de réalisation, l'axe vertical Z pourra être plus ou moins incliné par rapport audit axe de pesanteur.

Le bol 4 comporte également un fond de bol 6 disposé à l'endroit de l'extrémité inférieure 5a de la paroi périphérique cylindrique 5. Le fond de bol 6 peut être sensiblement plat. Le fond de bol peut ainsi définir un plan d'avancement Pa, par exemple perpendiculaire à l'axe vertical Z. Le fond de bol 6 peut être apte à accueillir les flans 2.

Le bol 4 est apte à accueillir les flans 2 et l'installation 1 de fourniture orientée de flans 2 comporte, à cette fin, un dispositif d'alimentation 7 du bol avec des flans 2 visible en particulier sur la figure 1.

Les flans 2 pénètrent dans le bol 4 au moyen du dispositif d'alimentation 7 et peuvent venir se placer en contact avec le fond de bol 6, en particulier sous l'effet de la gravité si l'axe vertical Z de l'installation est proche de l'axe vertical de la pesanteur.

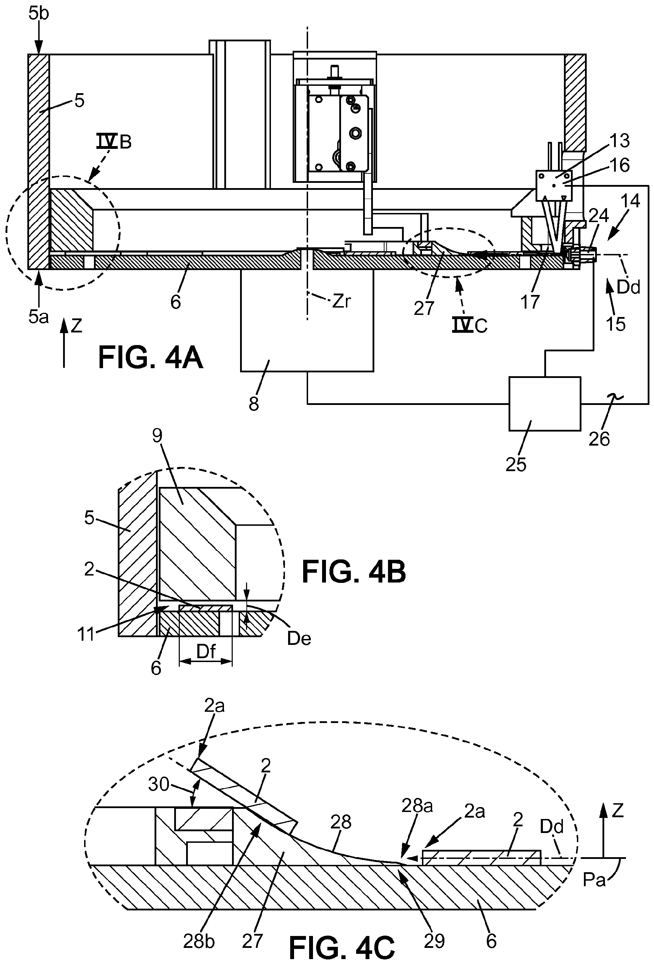

Comme cela est illustré sur la figure 4A, le fond de bol 6 est apte à être entrainé en rotation par rapport à la paroi périphérique cylindrique 5 au moyen d'un dispositif de déplacement 8. Le fond de bol 6 peut par exemple être entrainé en rotation autour d'un axe de rotation Zr. L'axe de rotation Zr peut être sensiblement parallèle à l'axe vertical Z et par exemple sensiblement perpendiculaire au plan d'avancement Pa.

Le dispositif de déplacement 8, en entrainant en rotation le fond de bol 6, déplace les flans 2 dans le plan d'avancement Pa. Par l'effet de la rotation du fond de bol et de la force centrifuge associée, les flans 2 peuvent ainsi venir en particulier se déplacer dans le plan d'avancement Pa le long de la paroi périphérique cylindrique 5.

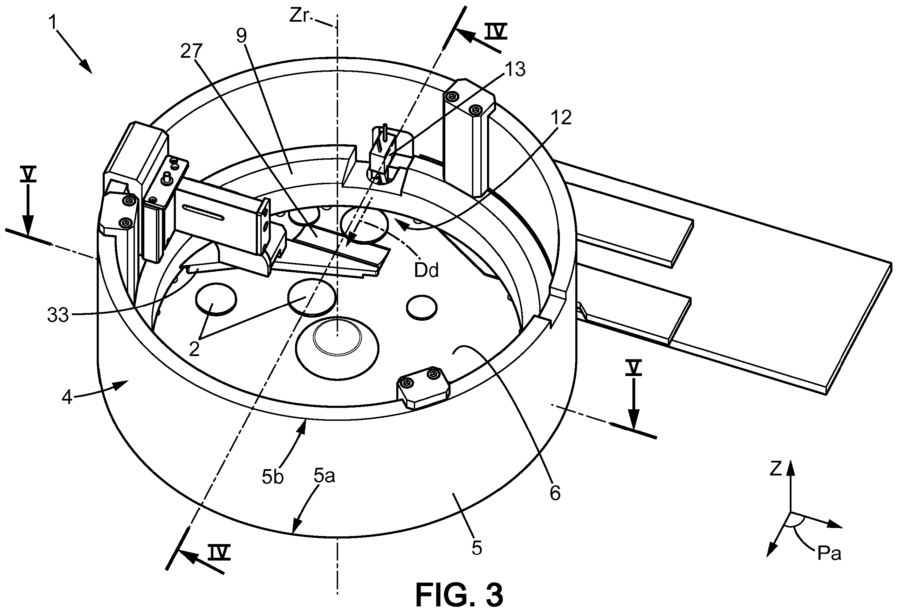

Comme cela est visible sur les figures 3 et 4B, pour assurer un déplacement guidé des flans 2, le bol 4 peut en outre comporter une paroi supérieure annulaire 9 le long de la paroi périphérique cylindrique 5. La paroi supérieure annulaire 9 peut être sensiblement parallèle au fond de bol 6 et écartée du fond de bol 6 d'une distance verticale d'écartement De. La distance verticale d'écartement De est par exemple un écartement selon l'axe vertical Z entre la paroi supérieure annulaire 9 et une zone périphérique annulaire 10 du fond de bol 6 en regard de ladite paroi supérieure annulaire 9.

La distance verticale d'écartement De peut en particulier être inférieure à la dimension maximale Df de la première face d'extension 3a et de la seconde face d'extension 3b comme illustré sur la figure 4B. De cette façon, la paroi supérieure annulaire 9 définit, avec la zone périphérique annulaire 10, un canal périphérique d'avancement 11 dans lequel des flans 2 sont aptes à se déplacer les uns à la suite des autres, les plans d'extension Pf des flans 2 étant sensiblement parallèles au plan d'avancement Pa.

Le canal périphérique d'avancement 11 est ainsi apte à permettre un déplacement des flans 2 avec l'une de leurs faces d'extension 3 en contact à plat avec le fond de bol 6, en particulier en contact à plat avec la zone périphérique annulaire 10.

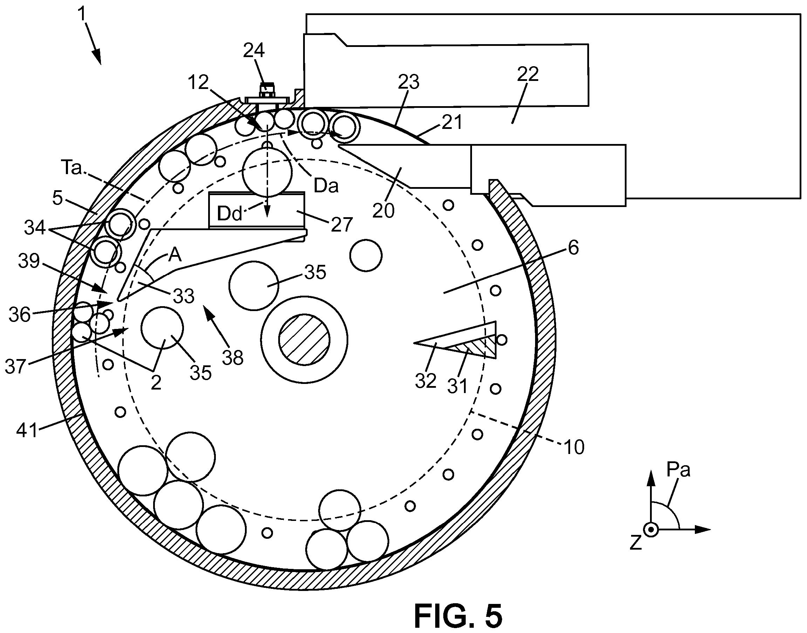

En se référant en particulier aux figures 4A et 5, le dispositif de déplacement 8 déplace en particulier les flans 2 les uns à la suite des autres selon une direction d'avancement Da à l'endroit d'une zone de tri 12 du bol, de sorte que les plans d'extension Pf des flans 2 soient parallèles au plan d'avancement Pa. La direction d'avancement est par exemple sensiblement tangente à un trajet d'avancement Ta parallèlement au quel se déplacent les flans 2.

Par « les plans d'extension Pf des flans 2 » sont « parallèles au plan d'avancement Pa », on entend par exemple que les flans 2 sont en contact à plat avec le fond de bol 6 avec l'une de leur faces d'extension 3.

Le plan d'avancement Pa sépare, à l'endroit de la zone de tri 12, l'espace en deux côtés opposés, un côté d'observation 14 et un second côté 15.

Lorsque les flans 2 se déplacent à l'endroit de la zone de tri 12 du bol, les flans 2 présentent ainsi de façon variable et non imposée, l'une ou l'autre de leurs faces d'extension 3 du côté d'observation 14 du plan d'avancement Pa.

L'installation 1 de fourniture orientée de flans 2 comporte en outre un dispositif de détection 13. Le dispositif de détection 13 est en particulier adapté pour détecter, sur le côté d'observation 14 du plan d'avancement Pa, au fur et à mesure du déplacement des flans 2 à l'endroit de la zone de tri 12 du bol, la caractéristique visuelle, physique ou chimique de la face d'extension 3 de chacun des flans 2 située du côté d'observation 14 du plan d'avancement.

Le dispositif de détection 13 peut en particulier comporter un capteur de proximité 16 apte à différencier les caractéristiques visuelles, physiques ou chimiques des deux faces d'extension 3 des flans 2, en particulier une caméra, un capteur optique, un capteur inductif, un capteur capacitif, un capteur magnétique, un capteur à ultrason ou même un capteur de conductivité. Un exemple de capteur de proximité utilisable est une caméra avec une source de lumière intégrée, par exemple « SPECTRO-3-30-DIL-CL » de la société « Sensor Instruments GmbH ».

Le capteur de proximité 16 peut éventuellement être monté sur un bras mobile de sorte à venir contacter une de la face d'extension 3 d'un flan 2 pour détecter la caractéristique visuelle, physique ou chimique puis à s'écarter dudit flan 2 pour permettre le déplacement du flan 2.

Dans un mode de réalisation préférentiel car plus simple et moins coûteux de fabrication, le capteur de proximité 16 est immobilisé sur le bol 4, par exemple sur la paroi périphérique 5 du bol, et détecte la caractéristique visuelles, physiques ou chimiques d'une face d'extension 3 d'un flan 2 sans contacter ladite face d'extension 3. Le capteur de proximité 16 peut par exemple être apte à mesurer une ou une combinaison parmi une couleur, une absorbance, une réflectance, une transmittance, une forme générale, un motif embossé, un motif en surélévation un motif en creux, une composition chimique, un module d'élasticité mécanique, une fréquence de résonance mécanique, une conductivité électrique, une résistance électrique, une capacité électrique, une inductance, une magnétisation, une perméabilité magnétique, de ladite face d'extension 3 ou d'une portion de ladite face d'extension 3.

Le dispositif de détection 13 peut être solidaire de la paroi périphérique cylindrique 5. En particulier, le dispositif de détection 13 peut être placé en contact intime avec la paroi périphérique cylindrique 5. Dans ce mode de réalisation, la paroi supérieure annulaire 9 peut comporter une ouverture d'accès 17 à l'endroit de la zone de tri 12, en regard du dispositif de détection 13.

L'ouverture d'accès 17 peut par exemple permettre au dispositif de détection 13 de détecter, sur le côté d'observation 14 du plan d'avancement Pa, la caractéristique visuelle, physique ou chimique de la face d'extension 3 de chacun des flans 2 située du côté d'observation 14 du plan d'avancement.

Le dispositif de détection 13 est ainsi apte à déterminer si le flan 2 est dans une orientation relative souhaitée 18 dans laquelle l'une parmi les deux faces d'extension 3 se trouve du côté d'observation 14 du plan d'avancement Pa, ou dans une orientation relative non souhaitée 19 dans laquelle l'autre parmi les deux faces d'extension 3 se trouve du côté d'observation 14 du plan d'avancement Pa.

Ainsi par exemple, dans un premier mode de réalisation de l'invention, une orientation relative souhaitée 18 pour la fourniture des flans 2 est une orientation des flans 2 selon laquelle la première face d'extension 3a de chacun des flans 2 se trouve du côté d'observation 14 du plan d'avancement Pa. Dans ce mode de réalisation, une orientation relative non souhaitée 19 pour la fourniture des flans 2 est une orientation des flans 2 selon laquelle la deuxième face d'extension 3b de chacun des flans 2 se trouve du côté d'observation 14 du plan d'avancement Pa.

Dans un deuxième mode de réalisation de l'invention, inversé par rapport au premier mode de réalisation, une orientation relative souhaitée 18 pour la fourniture des flans 2 est une orientation dans laquelle la deuxième face d'extension 3b de chacun des flans 2 se trouve du côté d'observation 14 du plan d'avancement Pa. Dans ce mode de réalisation, une orientation relative non souhaitée 19 est une orientation dans laquelle la première face d'extension 3a de chacun des flans 2 se trouve du côté d'observation 14 du plan d'avancement Pa.

Comme illustré sur la figure 5, l'installation 1 de fourniture orientée de flans 2 comporte encore un dispositif de guidage 20 adapté pour guider les flans 2 se trouvant dans l'orientation relative souhaitée 18 vers une sortie 21 du bol et les évacuer en vue d'une utilisation ultérieure.

Le dispositif de guidage 20 peut par exemple comprendre un canal de guidage 22 apte à guider les flans 2 hors du bol 4. La sortie 21 peut en particulier comporter une ouverture 23 à travers la paroi périphérique cylindrique 5 et le canal de guidage 22 peut être un canal apte à guider les flans 2 hors du fond de bol 6, à travers l'ouverture 23 de la sortie 21. Le canal de guidage 22 peut se prolonger hors du bol 6 pour constituer une plateforme 24 de sortie des flans 2. Le canal de guidage 22 peut en particulier s'étendre selon une direction sensiblement tangente au fond de bol 6 à l'endroit de la zone tri 12.

Le canal de guidage 22 peut être sensiblement plan et être coplanaire au moins à l'une de ses extrémités avec le fond de bol 6. De cette façon, un flan 2 se trouvant dans l'orientation relative souhaitée 18 peut être guidé hors du bol 4 sur une surface planaire du canal de guidage 22 et en conservant l'orientation relative souhaitée 18. Comme illustré sur les figures 4A et 5, l'installation 1 de fourniture orientée de flans 2 comporte encore un dispositif de sollicitation 24 adapté pour solliciter les flans 2 se trouvant dans l'orientation relative non souhaitée 19 selon une direction de déflexion Dd du bol, de sorte à communiquer un mouvement auxdits flans 2.

La communication dudit mouvement auxdits flans 2 peut être réalisée de façon guidée, en guidant lesdits flans 2 par des parois latérales (non illustré sur les figures).

Dans l'exemple de la figure 1, le dispositif de sollicitation 21 comprend en particulier une buse à air comprimé. La buse à air comprimé est apte à produire un jet d'air comprimé adapté pour venir frapper un flan 2 se trouvant à proximité de la buse à air comprimé sur la face périphérique 3c dudit flan 2.

Le dispositif de sollicitation 21 peut également comporter un actionneur utilisant un électroaimant de sorte à solliciter les flans 2 se trouvant dans l'orientation relative non souhaitée 19 par une force électromagnétique, par exemple une force électromagnétique répulsive ou attractive, apte à solliciter les flans 2 se trouvant dans l'orientation relative non souhaitée 19 selon une direction de déflexion Dd du bol, de sorte à communiquer un mouvement auxdits flans 2.

L'installation 1 de fourniture orientée de flans 2 comporte également une unité de commande 25 communiquant avec le dispositif de détection 13 et le dispositif de sollicitation 24.

L'unité de commande 25 est, d'une part, apte à déterminer, au fur et à mesure du déplacement des flans 2 à l'endroit de la zone de tri 12 du bol, si un flan 2 est dans l'orientation relative souhaitée 18 ou dans l'orientation relative non souhaitée 19, en recevant du dispositif de détection 13 un signal 26 fonction de la caractéristique visuelle, physique ou chimique de la face d'extension 3 dudit flan 2 se trouvant du côté d'observation 14 du plan d'avancement Pa.

Ainsi, dans un mode de réalisation de l'invention dans lequel le dispositif de détection 13 comporte un capteur optique, le signal 26 peut être un signal optique fonction de la caractéristique visuelle de la face d'extension 3 dudit flan 2 se trouvant du côté d'observation 14 du plan d'avancement Pa. Ainsi par exemple le dispositif de détection 13 peut comporter une source apte à émettre un faisceau. La source peut par exemple comporter un ensemble de longueur d'ondes, par exemple une source de lumière blanche ou plusieurs diodes LED, par exemple des diodes rouge, verte et bleu, de sorte à émettre un faisceau comportant plusieurs longueurs d'ondes différentes Ce faisceau peut se réfléchir sur la face d'extension 3 du flan 2 se trouvant du côté d'observation 14 du plan d'avancement Pa pour former un faisceau réfléchi apte à être détecté par une caméra, par exemple une caméra CCD. La caméra CCD peut ainsi générer un signal électrique 26 fonction en particulier de la couleur ou de la réflectance de la face d'extension 3 du flan 2 se trouvant du côté d'observation 14 du plan d'avancement Pa. L'unité de commande 25 peut ainsi recevoir du dispositif de détection 13 le signal 26 fonction de la couleur ou de la réflectance de la face d'extension 3 du flan 2 et déterminer, par exemple en comparant ledit signal 26 avec des seuils prédéfinis, si la face d'extension 3 du flan 2 se trouvant du côté d'observation 14 du plan d'avancement Pa, est la première face d'extension 3a ou la seconde face d'extension 3b. L'unité de commande 25 peut ainsi déterminer si un flan 2 est dans l'orientation relative souhaitée 18 ou dans l'orientation relative non souhaitée 19. A titre d'exemple, le capteur peut par exemple être un capteur CZ -H35S relié à un amplificateur CZ-V21AP, selon les références produit de la société « Keyence ».

Dans un premier mode de réalisation de l'invention, si ledit flan 2 est dans l'orientation relative non souhaitée 19, l'unité de commande 25 est apte, d'autre part, à commander le dispositif de sollicitation 24 pour solliciter ledit flan 2 se trouvant dans l'orientation relative non souhaitée 19 selon la direction de déflexion Dd du bol, de sorte à communiquer un mouvement audit flan 2.

Dans un second mode de réalisation de l'invention, si ledit flan 2 est dans l'orientation relative souhaitée 18, l'unité de commande 25 est apte, d'autre part, à commander le dispositif de guidage 20 pour guider le flan 2 vers la sortie 21 du bol et évacuer le flan 2. Les flans 2 évacués vers la sortie 21 peuvent être guidés, en conservant leur orientation, vers une étape ultérieure de procédé telle que, par exemple, une étape de frappe où l'une des faces d'extension 3 est mise en forme.

Comme illustré en particulier sur les figures 4A et 4C, l'installation 1 de fourniture orientée de flans 2 comporte encore un dispositif de déflexion 27 adapté pour défléchir progressivement hors du plan d'avancement Pa les flans 2 se trouvant dans l'orientation relative non souhaitée 19, lesdits flans 2 étant en mouvement, de sorte qu'ils retombent dans le bol 4 avec possiblement l'orientation relative souhaitée 18.

Le dispositif de déflexion 27 est apte à défléchir progressivement hors du plan d'avancement Pa un flan 2 se trouvant dans l'orientation relative non souhaitée 19, en écartant progressivement du plan d'avancement Pa une extrémité 2a du flan 2, le flan 2 étant en mouvement.

Dans une réalisation de l'invention, l'extrémité 2a d'un flan 2 en mouvement est une extrémité avant du flan 2 lorsque ledit flan 2 est en mouvement selon la direction de déflexion Dd, c'est-à-dire une extrémité la plus proche du dispositif de déflexion 27 du flan 2 lorsque le flan 2 est en mouvement selon la direction de déflexion Dd de la zone de tri 12 au dispositif de déflexion 27.

Le dispositif de déflexion 27 écarte ainsi progressivement du plan d'avancement l'extrémité 2a du flan 2 selon une direction perpendiculaire au plan d'avancement Pa, par exemple une direction sensiblement parallèle à l'axe vertical Z, de sorte à faire pivoter progressivement ledit flan 2.

Ainsi en particulier, le dispositif de déflexion 27 peut imposer audit flan 2 un mouvement de pivotement progressif autour d'un axe sensiblement parallèle au plan d'avancement Pa.

A cette fin le dispositif de déflexion 27 peut en particulier présenter une forme générale de coin.

Le dispositif de déflexion 27 peut comporter une face inférieure, par exemple disposée en contact avec le fond de bol 6, et une face supérieure apte à être en contact avec les flans 2.

Le dispositif de déflexion 27 présente une rampe p28 s'étendant entre une première extrémité 28a et une deuxième extrémité 28b, par exemple selon la direction de déflexion Dd, comme illustré sur la figure 4C. La première extrémité 28a peut par exemple être plus proche de la zone de tri 12 du bol que la deuxième extrémité 28b, selon la direction de déflexion Dd.

La rampe 28 peut présenter un premier angle 29 avec le plan d'avancement Pa à l'endroit de la première extrémité 28a et un deuxième angle 30 avec le plan d'avancement Pa à l'endroit de la deuxième extrémité 28b. La rampe 28 peut plus particulièrement être une rampe à courbure progressive. Ainsi, le premier angle 29 peut par exemple être sensiblement nul et le deuxième angle 30 peut être supérieur au premier angle 29.

Plus précisément, le deuxième angle 30 peut être compris entre de l'ordre de dix degrés et de l'ordre de quatre-vingt degrés. Le premier angle 29 peut être inférieur à cinq degrés.

Ainsi, dans un mode de réalisation de l'invention, un flan 2 se trouvant dans l'orientation relative non souhaitée 19 est défléchi progressivement hors du plan d'avancement Pa. En particulier, ledit flan 2 peut passer par une position intermédiaire dans laquelle le plan d'extension Pf dudit flan 2 est sensiblement perpendiculaire au plan d'avancement Pa.

Dans une variante de l'invention illustrée en particulier figure 5, l'installation 1 peut comprendre en outre un deuxième dispositif de déflexion 31, en particulier une deuxième rampe à courbure progressive 32 espacée de la première rampe à courbure progressive 28. Le deuxième dispositif de déflexion 31 peut comporter les caractéristiques et spécifications du dispositif de déflexion 27 tel que détaillé ci-avant.

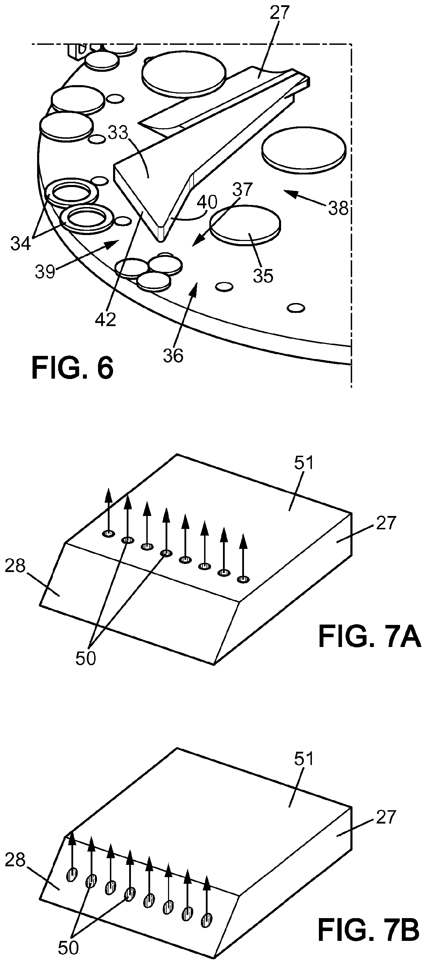

Comme illustré sur les figures 7A et 7B, le dispositif de déflexion 27, 31 peut également comporter une partie supérieure 51 s'étendant à partir de la deuxième extrémité 28b de la rampe 28, par exemple une partie supérieure plate 51.

En se référant à présent en particulier aux figures 5 et 6, l'installation 1 de fourniture orientée de flans 2 peut encore comporter un dispositif de sélection 33 adaptée pour sélectionner des flans à trier 34 et des flans en surnombre 35.

Le dispositif de sélection 33 peut être disposé à l'endroit d'une zone de sélection 36 du bol. La zone de sélection 36 du bol peut par exemple être située en amont de la zone de tri 12 du bol selon le trajet d'avancement Ta.

Plus particulièrement, le dispositif de sélection 33 peut définir un premier passage ouvert 37 entre la zone de sélection 36 et une zone de redirection 38 du bol et un deuxième passage ouvert 39 entre la zone de sélection 36 et la zone de tri 12.

Des flans en surnombre 35 peuvent être aptes à se déplacer vers la zone de redirection 38 du bol à travers le premier passage ouvert 37. En particulier, les flans en surnombre 35 peuvent être des flans 2 déplacés dans le plan d'avancement Pa, à l'endroit de la zone de sélection 36 de telle sorte qu'ils franchissent le premier passage ouvert 37.

Les flans à trier 34 peuvent être aptes à se déplacer les uns à la suite des autres parallèlement au trajet d'avancement Ta vers la zone de tri 12 du bol à travers le deuxième passage ouvert 39.

Plus précisément, le premier passage ouvert 37 peut être défini par une première paroi latérale verticale 40 du dispositif de sélection 33. Le deuxième passage ouvert 39 peut être délimité par une deuxième paroi latérale verticale 42 du dispositif de sélection 33.

Dans le mode de réalisation de l'invention illustré sur les figures 5 et 6, le deuxième passage ouvert 39 peut s'étendre longitudinalement de la zone de sélection 36 à la zone de tri 12.

Plus précisément, le deuxième passage ouvert 39 peut être délimité transversalement par une portion de canal 41 de la paroi périphérique cylindrique d'une part, et la deuxième paroi latérale verticale 42 du dispositif de sélection 33 d'autre part.

La première paroi latérale verticale 40 du dispositif de sélection peut former un angle A aigu avec la deuxième paroi latérale verticale 42 du dispositif de sélection 33, en particulier un angle A supérieur à dix degrés.

Dans l'exemple de réalisation de la figure 3, le dispositif de déflexion 27 est solidaire du dispositif de sélection 33. En particulier, le dispositif de déflexion 27 est monté sur le dispositif de sélection 33.

Dans une variante de réalisation, le dispositif de déflexion 27 est séparé du dispositif de sélection 3, de sorte à permettre d'ajuster séparément les positions de ces deux dispositifs et de contrôler indépendamment la sélection des flans 2 et leur déflexion.

Les figures 7A et 7B illustrent deux variantes de réalisation du dispositif de déflexion 27, 31 dans lesquelles le dispositif de déflexion 27, 31 comporte une ou une pluralité de buses d'arrivée d'air 50. Les buses sont en particulier disposées sur la face supérieure du dispositif de déflexion 27, 31.

Les buses 50 sont reliées à un dispositif de fourniture d'air sous pression non illustré sur les figures. Le dispositif de fourniture d'air sous pression peut, dans certains modes de réalisation, être relié fonctionnellement et commandé par l'unité de commande 25.

Les buses 50 sont ainsi aptes à créer un filet d'air vertical de sorte à défléchir davantage hors du plan d'avancement Pa les flans se trouvant sur le dispositif de déflexion 27, 31 par pression d'air sur lesdits flans.

Dans le mode de réalisation de la figure 7A, les buses 50 sont disposées à l'endroit de la partie supérieure 51 s'étendant à partir de la deuxième extrémité 28b de la rampe 28 et sont donc disposées hors de la rampe 28 et en particulier après ladite rampe 28 selon la direction de déflexion Dd.

Dans le mode de réalisation de la figure 7B, les buses 50 sont disposées à l'endroit de la rampe 28, par exemple sensiblement au milieu de ladite rampe 28.

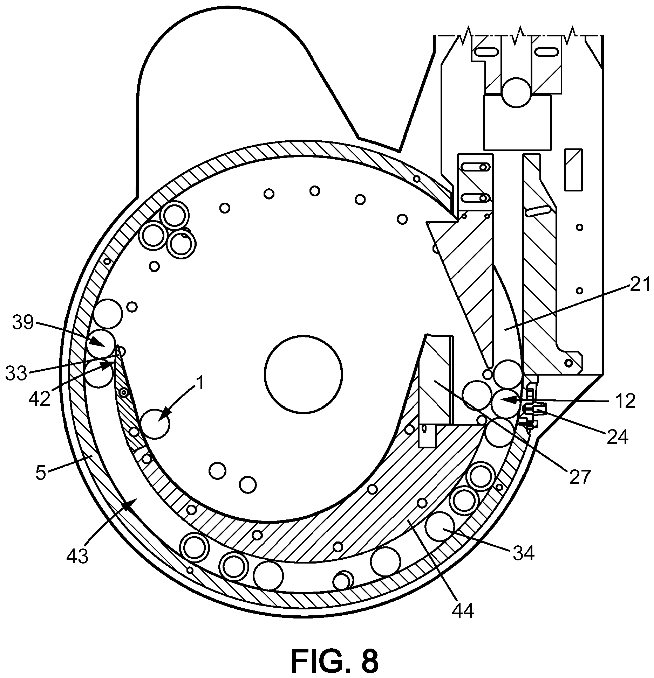

Les figures 8, 9 et 10 illustrent une variante d'une installation selon l'invention dans laquelle le dispositif de sélection 33 comporte un canal 43 fermé de guidage de flans. Le canal 43 relie le deuxième passage ouvert 39 de la zone de sélection 33 à la zone de tri 12.

Le canal 43 relie notamment le deuxième passage ouvert 39 de la zone de sélection 33 à la zone de tri 12 de manière à isoler les flans à trier 34, dans le bol, entre la zone de sélection 33 et la zone de tri 12.

De cette manière, le mouvement des flans à trier 34 n'est pas modifié ou perturbé dans le bol, une fois que lesdits flans à trier 34 ont été sélectionnés par le dispositif de sélection 33.

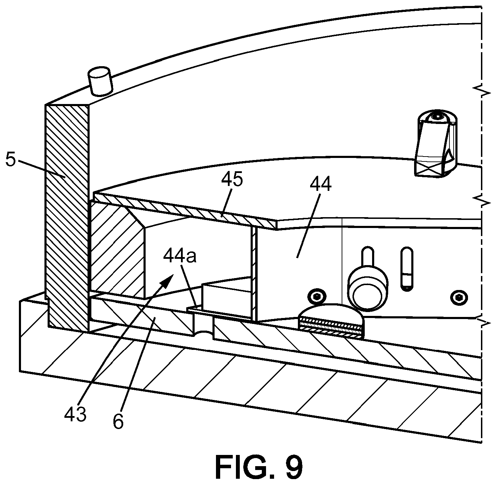

Plus particulièrement, en se référant à la figure 9, le canal 43 peut être délimité transversalement par une portion de canal 41 de la paroi périphérique cylindrique 5, une paroi latérale de canal 44 et une face supérieure de canal 45.

La face supérieure 45 peut être sensiblement parallèle au fond de bol 6 et permet d'éviter l'intrusion d'objets, notamment de flans non sélectionnés par le dispositif de sélection 33, dans le canal 43.

La paroi latérale de canal 44 peut être sensiblement parallèle à la portion de canal 41, au moins sur une portion de ladite paroi latérale de canal 44.

Ainsi par exemple sur la figure 9, la paroi latérale de canal 44 comporte une portion inférieure 44a écartée du fond de bol d'une distance verticale d'écartement inférieure à une épaisseur des flans 2. La portion inférieure 44a est par ailleurs sensiblement parallèle à la portion de canal 41 et, notamment, écartée de la paroi périphérique cylindrique 5 par une distance latérale d'écartement comprise entre une et deux fois une dimension transversale des flans 2, notamment une dimension maximale d'une face d'extension 3a, 3b des flans 2.

De cette manière, une fois introduits dans le canal 43, les flans à trier 34 sont guidés jusqu'à la zone de tri 12 de manière contrôlée.

De manière avantageuse, le canal 43 s'étend sur au moins un tiers d'une circonférence du bol 4, préférentiellement environ la moitié d'une circonférence du bol 4 comme illustré sur la figure 8. De cette manière, les flans à trier 34 sont bien séparés des flans en surnombre 35 et leur guidage est amélioré.

Le dispositif de déflexion 27 peut alors être disposé à une extrémité du canal 43 située à proximité de la zone de tri 12, comme illustré sur la figure 8.

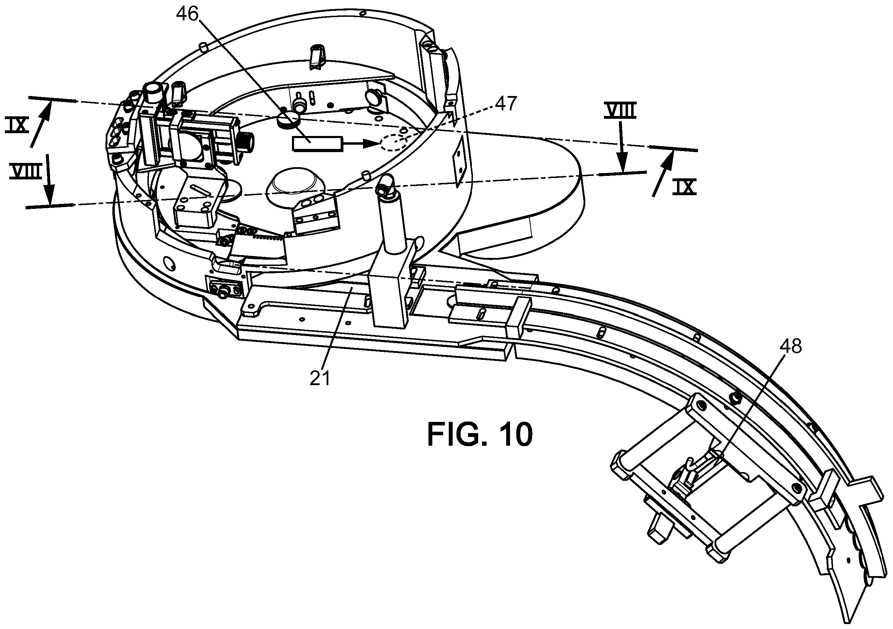

Par ailleurs, au moins un dispositif de sollicitation continue 46 peut être disposé dans le bol 4 comme illustré de manière indicative sur la figure 10. Le dispositif de sollicitation continue 46 est apte à appliquer en permanence une force aux flans 2 se trouvant dans une zone de sollicitation du bol 47. Un tel dispositif de sollicitation continue 46 permet un re-brassage des flans 2. Le dispositif de sollicitation continue 46 est avantageusement disposé hors du canal 43 pour ne pas perturber les flans à trier 34. Le dispositif de sollicitation continue 46 peut notamment guider les flans vers le deuxième passage ouvert 39.

Le dispositif de sollicitation continue 46 comprend ainsi par exemple une buse à air comprimé alimentée en continu.

Enfin, comme illustré sur la figure 10, l'installation peut en outre comporter un dispositif de contrôle 48. Le dispositif de contrôle 48 peut par exemple être disposé à l'extérieur du bol 4. Le dispositif de contrôle est adapté pour détecter, sur une face d'extension 3 de chacun des flans 2 guidés vers la sortie 21 du bol et évacués, une caractéristique visuelle, physique ou chimique, de manière à contrôler que lesdits flans se trouvent dans l'orientation relative souhaitée 18.

Dans un exemple de réalisation, lorsque le dispositif de contrôle 48 détecte que l'un des flans 2 guidés vers la sortie 21 du bol et évacués n'est pas dans l'orientation relative souhaitée 18, le fonctionnement de l'installation peut être interrompu. En variante, on peut extraire ledit flan 2 ne se trouvant pas dans l'orientation souhaitée hors du flux de flan 2 évacué du bol 4.

De cette manière, il est possible d'éviter l'utilisation de flans mal orientés lors des étapes ultérieures de fabrication, par exemple au cours fabrication de pièces de monnaie, de jetons ou de médailles.

Le dispositif de contrôle 48 peut notamment être similaire au dispositif de détection 13 décrit ci-avant.

## Revendications

1. Procédé de fourniture orientée de flans (2), lesdits flans étant du type s'étendant sensiblement selon un plan d'extension (Pf) au moyen de deux faces d'extension (3, 3a, 3b) opposées selon une direction d'épaisseur (Zf) perpendiculaire au plan d'extension, les deux faces d'extension présentant des caractéristiques visuelles, physiques ou chimiques différentes, dans lequel :
- a/ on a à disposition des flans et on alimente un bol (4) avec ces flans,
- b/ on déplace les flans les uns à la suite des autres selon une direction d'avancement (Da) à l'endroit d'une zone de tri (12) du bol, de sorte que les plans d'extension des flans soient parallèles à un plan d'avancement (Pa),
- c/ on détecte sur un côté d'observation (14) du plan d'avancement, au fur et à mesure du déplacement des flans à l'endroit de la zone de tri du bol, la caractéristique visuelle, physique ou chimique de la face d'extension (3) de chacun des flans se trouvant du côté d'observation (14) du plan d'avancement (Pa), et ainsi on détermine si le flan est dans une orientation relative souhaitée (18) dans laquelle l'une parmi les deux faces d'extension se trouve du côté d'observation (14) du plan d'avancement, ou dans une orientation relative non souhaitée (19) dans laquelle l'autre parmi les deux faces d'extension se trouve du côté d'observation (14) du plan d'avancement,
- d/ on guide les flans (2) se trouvant dans l'orientation relative souhaitée (18) vers une sortie (21) du bol et on les évacue en vue d'une utilisation ultérieure,
- e/ on sollicite les flans (2) se trouvant dans l'orientation relative non souhaitée (19) selon une direction de déflexion (Dd) du bol, de sorte à communiquer un mouvement auxdits flans, **caractérisé en ce que** :
- f/ on défléchit progressivement, au moyen d'un dispositif de déflexion (27) présentant une rampe (28), hors du plan d'avancement (Pa) selon une direction perpendiculaire au plan d'avancement (Pa) de sorte à faire pivoter progressivement lesdits flans les flans se trouvant dans l'orientation relative non souhaitée (19), lesdits flans étant en mouvement, de sorte qu'ils retombent dans le bol (4) avec possiblement l'orientation relative souhaitée (18).

2. Procédé selon la revendication 1, dans lequel pour déplacer les flans (2) les uns à la suite des autres on entraine en rotation un fond de bol (6) apte à accueillir les flans, en particulier dans lequel on entraine en rotation le fond de bol (6) autour d'un axe de rotation (Zr) sensiblement perpendiculaire au plan d'avancement (Pa).

3. Procédé selon l'une quelconque des revendications 1 à 2, dans lequel on défléchit progressivement hors du plan d'avancement un flan (2) se trouvant dans l'orientation relative non souhaitée (19) en écartant progressivement du plan d'avancement (Pa) une extrémité (2a) dudit flan, ledit flan étant en mouvement, en particulier dans lequel on écarte progressivement du plan d'avancement (Pa) l'extrémité (2a) du flan selon une direction (Z) perpendiculaire au plan d'avancement (Pa) de sorte à faire pivoter progressivement ledit flan.

4. Procédé selon l'une quelconque des revendications 1 à 3, dans lequel un flan (2) se trouvant dans l'orientation relative non souhaitée (19) est défléchi progressivement hors du plan d'avancement (Pa) en passant par une position intermédiaire dans laquelle le plan d'extension (Pf) dudit flan est sensiblement perpendiculaire au plan d'avancement (Pa).

5. Procédé selon l'une quelconque des revendications 1 à 4, dans lequel on sélectionne des flans à trier (34) et des flans en surnombre (35), à l'endroit d'une zone de sélection (36) du bol située en amont de la zone de tri (12) du bol selon un trajet d'avancement (Ta), de sorte que
- on déplace les flans à trier (34) les uns à la suite des autres parallèlement au trajet d'avancement (Ta) vers la zone de tri (12) du bol, et
- on déplace les flans en surnombre (35) vers une zone de redirection (38) du bol.

6. Installation (1) de fourniture orientée de flans (2), lesdits flans étant du type s'étendant sensiblement selon un plan d'extension (Pf) au moyen de deux faces d'extension (3, 3a, 3b) opposées selon une direction d'épaisseur (Ef) perpendiculaire au plan d'extension, les deux faces d'extension (3) présentant des caractéristiques visuelles, physiques ou chimiques différentes, comportant :
- un bol (4),
- un dispositif d'alimentation (7) du bol avec des flans,
- un dispositif de déplacement (8) adapté pour déplacer les flans (2) les uns à la suite des autres selon une direction d'avancement (Da) à l'endroit d'une zone de tri (12) du bol, de sorte que les plans d'extension (Pf) des flans se trouvent dans un même plan d'avancement (Pa),
- un dispositif de détection (13) adapté pour détecter, sur un côté d'observation (14) du plan d'avancement (Pa), au fur et à mesure du déplacement des flans (2) à l'endroit de la zone de tri (12) du bol, la caractéristique visuelle, physique ou chimique de la face d'extension (3) de chacun des flans située du côté d'observation (14) du plan d'avancement (Pa), de sorte à déterminer si le flan est dans une orientation relative souhaitée (18) dans laquelle l'une parmi les deux faces d'extension se trouve du côté d'observation du plan d'avancement, ou dans une orientation relative non souhaitée (19) dans laquelle l'autre parmi les deux faces d'extension se trouve du côté d'observation du plan d'avancement, en particulier un dispositif de détection (13) comportant un capteur de proximité (16) apte à différencier les caractéristiques visuelles, physiques ou chimiques des deux faces d'extension (3, 3a, 3b) des flans, en particulier une caméra, un capteur optique, inductif, capacitif ou magnétique,
- un dispositif de guidage (20) adapté pour guider les flans (2) se trouvant dans l'orientation relative souhaitée (18) vers une sortie (21) du bol et les évacuer en vue d'une utilisation ultérieure,
- un dispositif de sollicitation (24) adapté pour solliciter les flans (2) se trouvant dans l'orientation relative non souhaitée (19) selon une direction de déflexion (Dd) du bol (4), de sorte à communiquer un mouvement auxdits flans, le dispositif de sollicitation (24) étant **caractérisé en ce qu'**il comprend une buse à air comprimé apte à produire un jet d'air comprimé adapté pour venir frapper les flans (2) se trouvant à proximité de la buse à air comprimé sur une face périphérique (3c) desdits flans (2), et **caractérisé en ce que** :
- un dispositif de déflexion (27), présentant une rampe (28), adapté pour défléchir progressivement hors du plan d'avancement (Pa), selon une direction perpendiculaire au plan d'avancement (Pa) de sorte à faire pivoter progressivement les flans se trouvant dans l'orientation relative non souhaitée (19), lesdits flans (2) étant en mouvement, de sorte qu'ils retombent dans le bol avec possiblement l'orientation relative souhaitée (18).

7. Installation selon la revendication 6, comportant en outre une unité de commande (25) communiquant avec le dispositif de détection (13) et l'un ou moins parmi le dispositif de sollicitation (24) et le dispositif de guidage (20), l'unité de commande étant apte à
- déterminer, au fur et à mesure du déplacement des flans (2) à l'endroit de la zone de tri (12) du bol, si un flan est dans une orientation relative souhaitée (18) ou dans une orientation relative non souhaitée (19), en recevant du dispositif de détection (13) un signal fonction de la caractéristique visuelle, physique ou chimique de la face d'extension (3) dudit flans se trouvant du côté d'observation (14) du plan d'avancement (Pa),
- si ledit flan est dans l'orientation relative non souhaitée (19), commander le dispositif de sollicitation (24) pour solliciter ledit flan se trouvant dans l'orientation relative non souhaitée selon la direction de déflexion (Dd) du bol, de sorte à communiquer un mouvement audit flan (2), et/ou
- si ledit flan est dans l'orientation relative souhaitée (18), commander le dispositif de guidage (20) pour guider ledit flan (2) vers une sortie (21) du bol et évacuer ledit flan en vue d'une utilisation ultérieure.

8. Installation selon l'une quelconque des revendications 6 à 7, dans laquelle le dispositif de déflexion (27) est une rampe à courbure progressive (28) présentant
- un premier angle (29) avec le plan d'avancement (Pa) à l'endroit d'une première extrémité (28a),
- un deuxième angle (30) avec le plan d'avancement (Pa) à l'endroit d'une deuxième extrémité (28b),
- le premier angle (29) étant sensiblement nul et le deuxième angle (30) étant supérieur au premier angle,
- la première extrémité (28a) étant plus proche de la zone de tri (12) du bol que la deuxième extrémité (28b), selon la direction de déflexion (Dd),
en particulier dans laquelle le deuxième angle (30) de la rampe à courbure progressive (28) est compris entre de l'ordre de dix degrés et de l'ordre de quatre-vingt degrés, et/ou l'installation comprend en outre un deuxième dispositif de déflexion (31), en particulier une deuxième rampe à courbure progressive (32) espacée de la première rampe à courbure progressive (28).

9. Installation selon l'une quelconque des revendications 6 à 8, dans laquelle un dispositif de déflexion (27, 31) comporte au moins une buse d'arrivée d'air (50), en particulier dans laquelle ladite au moins une buse d'arrivée d'air (50) est disposée à l'endroit d'une rampe (28, 32) du dispositif de déflexion (27, 31), et/ou dans laquelle ladite au moins une buse d'arrivée d'air (50) est disposée à l'endroit d'une partie supérieure (51) du dispositif de déflexion (27, 31) s'étendant à partir d'une extrémité (28b) d'une rampe (28) du dispositif de déflexion (27, 31), en particulier à l'endroit d'une partie supérieure plate (51) du dispositif de déflexion (27, 31).

10. Installation selon l'une quelconque des revendications 6 à 9, dans laquelle le bol comporte
- une paroi périphérique cylindrique (5), s'étendant selon un axe vertical (Z) depuis une extrémité inférieure (5a) jusqu'à une extrémité supérieure (5b),
- un fond de bol (6) disposé à l'endroit de l'extrémité inférieure (5a) de la paroi périphérique cylindrique (5) et apte à être entrainé en rotation par rapport à la paroi périphérique cylindrique (5), autour d'un axe de rotation (Zr) sensiblement parallèle à l'axe vertical,
en particulier dans laquelle
le fond de bol (6) est sensiblement plat et parallèle au plan d'avancement (Pa), et/ou le bol (4) comporte une paroi supérieure annulaire (9) le long de la paroi périphérique cylindrique (5), ladite paroi supérieure annulaire (9) étant sensiblement parallèle au fond de bol (6) et écartée du fond de bol d'une distance verticale d'écartement (De) inférieure à deux fois une épaisseur des flans (2), de sorte à définir, avec une zone périphérique annulaire (10) du fond de bol en regard de ladite paroi supérieure annulaire (9), un canal périphérique d'avancement (11) dans lequel des flans (2) sont aptes à se déplacer les uns à la suite des autres, les plans d'extension (3) des flans (2) étant parallèles au plan d'avancement (Pa), en particulier dans laquelle la paroi supérieure annulaire (9) comporte une ouverture d'accès (17) à l'endroit de la zone de tri (12), en regard du dispositif de détection (13).

11. Installation selon la revendication 10, dans laquelle le dispositif de détection (13), le dispositif de sollicitation (24) et le dispositif de déflexion (27) sont solidaires de la paroi périphérique cylindrique (5).

12. Installation selon l'une quelconque des revendications 6 à 11, comportant en outre un dispositif de sélection (33) adaptée pour sélectionner des flans à trier (34) et des flans en surnombre (35), disposé à l'endroit d'une zone de sélection (36) du bol située en amont de la zone de tri (12) du bol selon un trajet d'avancement (Ta),
- le dispositif de sélection (33) définissant un premier passage ouvert (37) entre la zone de sélection (33) et une zone de redirection (38) du bol et un deuxième passage ouvert (39) entre la zone de sélection (33) et la zone de tri (12),
- les flans en surnombre (35) étant aptes à se déplacer vers la zone de redirection (38) du bol à travers le premier passage ouvert (37),
- les flans à trier (34) étant aptes à se déplacer les uns à la suite des autres parallèlement à la direction d'avancement (Ta) vers la zone de tri du bol à travers le deuxième passage ouvert (39),
en particulier, dans laquelle
le dispositif de déflexion (27) est solidaire du, et monté sur le, dispositif de sélection (33), et/ou le premier passage ouvert (37) est défini par une première paroi latérale verticale (40) du dispositif de sélection (33), et/ou
le deuxième passage ouvert (39) est défini par une deuxième paroi latérale verticale (42) du dispositif de sélection (33), et/ou
le premier passage ouvert (37) est défini par une première paroi latérale verticale (40) du dispositif de sélection (33), le deuxième passage ouvert (39) est défini par une deuxième paroi latérale verticale (42) du dispositif de sélection (33), et
la première paroi latérale verticale (40) du dispositif de sélection (33) forme un angle aigu (A) avec la deuxième paroi latérale verticale (42) du dispositif de sélection (33), en particulier un angle (A) supérieur à cinq degrés.

13. Installation selon la revendications 12, dans laquelle le dispositif de sélection (33) comporte un canal (43) fermé de guidage de flans reliant le deuxième passage ouvert (39) de la zone de sélection (33) à la zone de tri (12) de manière à isoler les flans à trier (34), dans le bol, entre la zone de sélection (33) et la zone de tri (12), en particulier dans laquelle
le canal (43) s'étend sur au moins un tiers d'une circonférence du bol (4), préférentiellement environ la moitié d'une circonférence du bol (4), et/ou dans laquelle le bol comporte
- une paroi périphérique cylindrique (5), s'étendant selon un axe vertical (Z) depuis une extrémité inférieure (5a) jusqu'à une extrémité supérieure (5b),
- un fond de bol (6) disposé à l'endroit de l'extrémité inférieure (5a) de la paroi périphérique cylindrique (5) et apte à être entrainé en rotation par rapport à la paroi périphérique cylindrique (5), autour d'un axe de rotation (Zr) sensiblement parallèle à l'axe vertical, le canal (43) étant délimité transversalement par
- une portion de canal (41) de la paroi périphérique cylindrique (5),
- une paroi latérale de canal (44), notamment présentant au moins une portion (44a) sensiblement parallèle à la portion de canal (41), et
- une face supérieure de canal (45), notamment une face supérieure sensiblement parallèle au fond de bol (6), en particulier dans laquelle la paroi latérale de canal (44) comporte une portion inférieure (44a) écartée du fond de bol d'une distance verticale d'écartement inférieure à une épaisseur des flans (2) et écartée de la paroi périphérique cylindrique (5) par une distance latérale d'écartement comprise entre une et deux fois une dimension transversale des flans (2), notamment une dimension maximale d'une face d'extension (3a, 3b) des flans (2), et/ou le dispositif de déflexion (27) est disposé à une extrémité du canal (43) située à proximité de la zone de tri (12).

14. Installation selon l'une quelconque des revendications 6 à 13, comportant en outre au moins un dispositif de sollicitation continue (46), disposé dans le bol (4), notamment hors du canal (43), et apte à appliquer en permanence une force aux flans (2) se trouvant dans une zone de sollicitation du bol (47), en particulier dans laquelle le dispositif de sollicitation continue (46) comprend une buse à air comprimé alimentée en continu.

15. Installation selon l'une quelconque des revendications 6 à 14, comportant en outre un dispositif de contrôle (48) adapté pour détecter, sur une face d'extension (3) de chacun des flans (2) guidés vers la sortie (21) du bol et évacués, une caractéristique visuelle, physique ou chimique, de manière à contrôler que lesdits flans se trouvent dans l'orientation relative souhaitée (18).

## Patentansprüche

1. Verfahren zur ausgerichteten Zuführung von Zuschnitten (2), wobei die Zuschnitte von dem Typ sind, der sich im Wesentlichen entlang einer Erstreckungsebene (Pf) mittels zweier in einer Dickenrichtung (Zf) gegenüberliegender Erstreckungsflächen (3, 3a, 3b) senkrecht zur Erstreckungsebene erstreckt, wobei die beiden Erstreckungsflächen unterschiedliche visuelle, physikalische oder chemische Eigenschaften aufweisen, wobei:
- a/ Zuschnitte zur Verfügung stehen und diese Zuschnitten einer Schale (4) zugeführt werden,
- b/ die Zuschnitte nacheinander in einer Vorschubrichtung (Da) an die Stelle eines Schalen-Sortierbereichs (12) bewegt werden, so dass die Erstreckungsebenen der Zuschnitte parallel zu einer Vorschubebene (Pa) liegen,
- c/ auf einer Beobachtungsseite (14) der Vorschubebene, im Verlauf der Bewegung der Zuschnitte zu der Stelle des Schalen-Sortierbereichs (12) die visuelle, physikalische oder chemische Eigenschaft der Erstreckungsfläche (3) jedes der Zuschnitte, die sich an der Beobachtungsseite (14) der Vorschubebene (Pa) befinden, erfasst wird, und dadurch bestimmt wird, ob sich der Zuschnitt in einer gewünschten relativen Ausrichtung (18) befindet, in der eine der beiden Erstreckungsflächen auf der Beobachtungsseite (14) der Vorschubebene liegt, oder in einer unerwünschten relativen Ausrichtung (19), in der die andere der beiden Erstreckungsflächen auf der Beobachtungsseite (14) der Vorschubebene liegt,
- d/ die Zuschnitte (2), die sich in der gewünschten relativen Ausrichtung (18) befinden, zu einem Ausgang (21) der Schale geführt und zur weiteren Verwendung ausgegeben werden,
- e/ die Zuschnitte (2), die sich in der unerwünschten relativen Ausrichtung (19) befinden, in einer Umlenkrichtung (Dd) der Schale belastet werden, um den Zuschnitten eine Bewegung zu verleihen, **dadurch gekennzeichnet, dass**:
- f/ die Zuschnitte, die sich in der unerwünschten relativen Ausrichtung (19) befinden, mittels einer Umlenkvorrichtung (27), die eine Rampe (28) umfasst, nach und nach aus der Vorschubebene (Pa) in eine Richtung senkrecht zur Vorschubebene (Pa) umgelenkt werden, um die Zuschnitte, die in der unerwünschten relativen Ausrichtung (19) liegen, nach und nach zu drehen, wobei die Zuschnitte in Bewegung sind, so dass sie in die Schale (4) zurückfallen, möglichst mit der gewünschten relativen Ausrichtung (18).

2. Verfahren nach Anspruch 1, wobei zur aufeinander folgenden Bewegung der Zuschnitte (2) ein Schalenboden (6), der dazu geeignet ist, die Zuschnitte aufzunehmen, in Drehung versetzt wird, insbesondere wobei der Schalenboden (6) um eine Drehachse (Zr), die im Wesentlichen senkrecht zur Vorschubebene (Pa) verläuft, in Drehung versetzt wird.

3. Verfahren nach einem der Ansprüche 1 bis 2, wobei ein Zuschnitt (2), der sich in der unerwünschten relativen Ausrichtung (19) befindet, nach und nach aus der Vorschubebene umgelenkt wird, indem ein Ende (2a) des Zuschnitts nach und nach von der Vorschubebene (Pa) wegbewegt wird, wobei der Zuschnitt in Bewegung ist, wobei insbesondere das Ende (2a) des Zuschnitts in einer Richtung (Z) senkrecht zur Vorschubebene (Pa) nach und nach von der Vorschubebene (Pa) entfernt wird, so dass der Zuschnitt nach und nach geschwenkt wird.

4. Verfahren nach einem der Ansprüche 1 bis 3, wobei ein Zuschnitt (2), der sich in der unerwünschten relativen Ausrichtung (19) befindet, nach und nach aus der Vorschubebene (Pa) über eine Zwischenposition umgelenkt wird, in der die Erstreckungsebene (Pf) des Zuschnitts im Wesentlichen senkrecht zur Vorschubebene (Pa) liegt.

5. Verfahren nach einem der Ansprüche 1 bis 4, wobei zu sortierende Zuschnitte (34) und überzählige Zuschnitte (35) in einem Schalen-Auswahlbereich (36) stromaufwärts des Schalen-Sortierbereichs (12) entlang einer Vorschubbahn (Ta) ausgewählt werden, so dass
- die zu sortierenden Zuschnitte (34) nacheinander parallel zur Vorschubbahn (Ta) in Richtung des Schalen-Sortierbereichs (12) bewegt werden, und
- die überzähligen Zuschnitte (35) zu einem Umleitungsbereich (38) der Schale bewegt werden.

6. Anlage (1) zur ausgerichteten Zuführung von Zuschnitten (2), wobei die Zuschnitte vom Typ sind, der sich im Wesentlichen entlang einer Erstreckungsebene (Pf) mittels zweier in einer Dickenrichtung (Ef) gegenüberliegender Erstreckungsflächen (3, 3a, 3b) senkrecht zur Erstreckungsebene erstreckt, wobei die beiden Erstreckungsflächen (3) unterschiedliche visuelle, physikalische oder chemische Eigenschaften aufweisen, umfassend:
- eine Schale (4),
- eine Vorrichtung zum Zuführen (7) von Zuschnitten zur Schale,
- eine Bewegungsvorrichtung (8), die dazu ausgebildet ist, die Zuschnitte (2) nacheinander in einer Vorschubrichtung (Da) zu der Stelle eines Schalen-Sortierbereichs (12) zu verschieben, so dass die Erstreckungsebenen (Pf) der Zuschnitte in einer gemeinsamen Vorschubebene (Pa) liegen,
- eine Erfassungsvorrichtung (13), die dazu ausgebildet ist, auf einer Beobachtungsseite (14) der Vorschubebene (Pa) im Verlauf der Bewegung der Zuschnitte (2) zu dem Sortierbereich (12) der Schale die visuellen, physikalischen oder chemischen Eigenschaften der Erstreckungsfläche (3) jedes der Zuschnitte auf der Beobachtungsseite (14) der Vorschubebene (Pa) zu erfassen, um festzustellen, ob sich der Zuschnitt in einer gewünschten relativen Ausrichtung (18) befindet, in der sich eine der beiden Erstreckungsflächen auf der Beobachtungsseite der Vorschubebene befindet, oder in einer unerwünschten relativen Ausrichtung (19), in der die andere der beiden Erstreckungsflächen auf der Beobachtungsseite der Vorschubebene liegt, insbesondere eine Erfassungsvorrichtung (13) mit einem Näherungssensor (16), der in der Lage ist, die visuellen, physikalischen oder chemischen Eigenschaften der beiden Erstreckungsflächen (3, 3a, 3b) der Zuschnitte zu unterscheiden, insbesondere eine Kamera, einen optischen, induktiven, kapazitiven oder magnetischen Sensor,
- eine Führungsvorrichtung (20), die dazu ausgebildet ist, die Zuschnitte (2), die in der gewünschten relativen Ausrichtung (18) liegen, zu einem Ausgang (21) der Schale zu führen und sie für eine spätere Verwendung auszugeben,
- eine Vorspannvorrichtung (24), die dazu ausgebildet ist, die Zuschnitte (2), die in der unerwünschten relativen Ausrichtung (19) liegen, in einer Umlenkrichtung (Dd) der Schale (4) vorzuspannen, um den Zuschnitten eine Bewegung zu verleihen, wobei die Vorspannvorrichtung (24) **dadurch gekennzeichnet ist, dass** sie eine Druckluftdüse umfasst, die einen Druckluftstrahl erzeugen kann, der dazu ausgebildet ist, auf die Zuschnitte (2) in der Nähe der Druckluftdüse auf einer Umfangsfläche (3c) der Zuschnitte (2) zu treffen, und **dadurch gekennzeichnet, dass**:
- eine Umlenkvorrichtung (27), die eine Rampe (28) aufweist, die dazu ausgebildet ist, dass sie nach und nach aus der Vorschubebene (Pa) heraus in eine Richtung senkrecht zur Vorschubebene (Pa) umgelenkt wird, so dass die Zuschnitte, die sich in der unerwünschten relativen Ausrichtung (19) befinden, nach und nach gedreht werden, wobei die Zuschnitte (2) in Bewegung sind, so dass sie möglichst mit der gewünschten relativen Ausrichtung (18) in die Schale zurückfallen.

7. Anlage nach Anspruch 6, welche ferner eine Steuereinheit (25) umfasst, die mit der Erfassungsvorrichtung (13) und wenigstens einer aus Vorspannvorrichtung (24) und Führungsvorrichtung (20) in Verbindung steht, wobei die Steuereinheit in der Lage ist,
- im Verlauf der Bewegung der Zuschnitte (2) zu dem Sortierbereich (12) der Schale festzustellen, ob sich ein Zuschnitt in einer gewünschten relativen Ausrichtung (18) oder in einer unerwünschten relativen Ausrichtung (19) befindet, indem sie von der Erfassungsvorrichtung (13) ein Signal empfängt, das von der visuellen, physikalischen oder chemischen Eigenschaft der Erstreckungsfläche (3) des Zuschnitts, der sich auf der Beobachtungsseite (14) der Vorschubebene (Pa) befindet, abhängig ist,
- wenn sich der Zuschnitt in der unerwünschten relativen Ausrichtung (19) befindet, die Vorspannvorrichtung (24) zu steuern, um den Zuschnitt, der sich in der unerwünschten relativen Ausrichtung befindet, entlang der Umlenkrichtung (Dd) der Schale vorzuspannen, um so dem Zuschnitt (2) eine Bewegung zu verleihen, und/oder
- wenn sich der Zuschnitt in der gewünschten relativen Ausrichtung (18) befindet, die Führungsvorrichtung (20) zu steuern, um den Zuschnitt (2) zu einem Ausgang (21) der Schale zu führen und den Zuschnitt zur späteren Verwendung auszugeben.

8. Anlage nach einem der Ansprüche 6 oder 7, wobei die Umlenkvorrichtung (27) eine progressiv gekrümmte Rampe (28) ist mit:
- einem ersten Winkel (29) mit der Vorschubebene (Pa) an einem ersten Ende (28a),
- einem zweiten Winkel (30) mit der Vorschubebene (Pa) an einem zweiten Ende (28b),
- wobei der erste Winkel (29) im Wesentlichen gleich null ist und der zweite Winkel (30) größer ist als der erste Winkel,
- wobei das erste Ende (28a) in der Umlenkrichtung (Dd) näher an dem Schalen-Sortierbereich (12) liegt als das zweite Ende (28b),
insbesondere wobei der zweite Winkel (30) der progressiv gekrümmten Rampe (28) zwischen der Größenordnung von zehn Grad und der Größenordnung von achtzig Grad liegt, und/oder die Anlage ferner eine zweite Umlenkvorrichtung (31) umfasst, insbesondere eine zweite progressiv gekrümmte Rampe (32), die zu der ersten progressiv gekrümmten Rampe (28) beabstandet ist.

9. Anlage nach einem der Ansprüche 6 bis 8, wobei eine Umlenkvorrichtung (27, 31) wenigstens eine Luftzufuhrdüse (50) aufweist, insbesondere wobei die wenigstens eine Luftzufuhrdüse (50) an einer Rampe (28, 32) der Umlenkvorrichtung (27, 31) angeordnet ist, und/oder wobei die wenigstens eine Luftzufuhrdüse (50) an der Stelle eines oberen Teils (51) der Umlenkvorrichtung (27, 31) angeordnet ist, der sich von einem Ende (28b) einer Rampe (28) der Umlenkvorrichtung (27, 31) aus erstreckt, insbesondere an der Stelle eines flachen oberen Teils (51) der Umlenkvorrichtung (27, 31).

10. Anlage nach einem der Ansprüche 6 bis 9, wobei die Schale Folgendes umfasst:
- eine zylindrische Umfangswand (5), die sich entlang einer vertikalen Achse (Z) von einem unteren Ende (5a) zu einem oberen Ende (5b) erstreckt,
- einen Schalenboden (6), der an dem unteren Ende (5a) der zylindrischen Umfangswand (5) angeordnet ist und in Bezug auf die zylindrische Umfangswand (5) um eine Drehachse (Zr), die im Wesentlichen parallel zu der vertikalen Achse liegt, drehbar ist,
insbesondere wobei
der Schalenboden (6) im Wesentlichen flach und parallel zur Vorschubebene (Pa) ist, und/oder
die Schale (4) eine ringförmige obere Wand (9) entlang der zylindrischen Umfangswand (5) aufweist, wobei die ringförmige obere Wand (9) im Wesentlichen parallel zum Schalenboden (6) ist und vom Schalenboden um einen vertikalen Abstandsabstand (De) beabstandet ist, der kleiner als das Zweifache einer Dicke der Zuschnitte (2) ist, so dass mit einem ringförmigen, der ringförmigen oberen Wand (9) zugewandten Umfangsbereich (10) des Schalenbodens ein peripherer Vorschubkanal (11) gebildet ist, in dem sich die Zuschnitte (2) nacheinander bewegen können, wobei die Erstreckungsebenen (3) der Zuschnitte (2) parallel zur Vorschubebene (Pa) verlaufen, insbesondere wobei die obere ringförmige Wand (9) eine Zugangsöffnung (17) an der Stelle des Sortierbereichs (12) gegenüber der Erfassungsvorrichtung (13) zugewandt aufweist.

11. Anlage nach Anspruch 10, wobei die Erfassungsvorrichtung (13), die Vorspannvorrichtung (24) und die Umlenkvorrichtung (27) fest mit der zylindrischen Umfangswand (5) verbunden sind.

12. Anlage nach einem der Ansprüche 6 bis 11, welche ferner eine Auswahlvorrichtung (33) umfasst, die zur Auswahl von zu sortierenden Zuschnitten (34) und überzähligen Zuschnitten (35) ausgebildet ist und an der Stelle eines Schalen-Auswahlbereichs (36) angeordnet ist, die sich stromaufwärts des Schalen-Sortierbereichs (12) entlang einer Vorschubbahn (Ta) befindet,
- wobei die Auswahlvorrichtung (33) einen ersten offenen Durchgang (37) zwischen dem Auswahlbereich (33) und einem Umleitungsbereich (38) der Schale und einen zweiten offenen Durchgang (39) zwischen dem Auswahlbereich (33) und dem Sortierbereich (12) begrenzt,
- wobei sich die überzähligen Zuschnitte (35) durch den ersten offenen Durchgang (37) zum Umleitungsbereich (38) der Schale bewegen können,
- wobei die zu sortierenden Zuschnitte (34) dazu geeignet sind, sich nacheinander parallel zur Vorschubbahn (Ta) durch den zweiten offenen Durchgang (39) zum Sortierbereich der Schale zu bewegen,
insbesondere, wobei
die Umlenkvorrichtung (27) einstückig mit der Auswahlvorrichtung (33) ist und an dieser angebracht ist, und/oder
der erste offene Durchgang (37) durch eine erste vertikale Seitenwand (40) der Auswahlvorrichtung (33) begrenzt ist, und/oder
der zweite offene Durchgang (39) durch eine zweite vertikale Seitenwand (42) der Auswahlvorrichtung (33) begrenzt ist, und/oder
der erste offene Durchgang (37) durch eine erste vertikale Seitenwand (40) der Auswahlvorrichtung (33) begrenzt ist, der zweite offene Durchgang (39) durch eine zweite vertikale Seitenwand (42) der Auswahlvorrichtung (33) begrenzt ist, und die erste vertikale Seitenwand (40) der Auswahlvorrichtung (33) mit der zweiten vertikalen Seitenwand (42) der Auswahlvorrichtung (33) einen spitzen Winkel (A), insbesondere einen Winkel (A) größer als fünf Grad, bildet.

13. Anlage nach Anspruch 12, wobei die Auswahlvorrichtung (33) einen geschlossenen Zuschnittführungskanal (43) aufweist, der den zweiten offenen Durchgang (39) des Auswahlbereichs (33) mit dem Sortierbereich (12) verbindet, um die zu sortierenden Zuschnitte (34) in der Schale zwischen dem Auswahlbereich (33) und dem Sortierbereich (12) zu isolieren,
insbesondere wobei
sich der Kanal (43) über wenigstens ein Drittel eines Umfangs der Schale (4), vorzugsweise etwa die Hälfte eines Umfangs der Schale (4), erstreckt, und/oder wobei die Schale Folgendes umfasst:
- eine zylindrische Umfangswand (5), die sich entlang einer vertikalen Achse (Z) von einem unteren Ende (5a) zu einem oberen Ende (5b) erstreckt,
- einen Schalenboden (6), der an dem unteren Ende (5a) der zylindrischen Umfangswand (5) angeordnet und in Bezug auf die zylindrische Umfangswand (5) um eine Drehachse (Zr) drehbar ist, die im Wesentlichen parallel zu der vertikalen Achse liegt, wobei der Kanal (43) in Querrichtung begrenzt wird durch
- einen Kanalabschnitt (41) der zylindrischen Umfangswand (5),
- eine Kanalseitenwand (44), die insbesondere wenigstens einen Abschnitt (44a) aufweist, der im Wesentlichen parallel zu dem Kanalabschnitt (41) liegt, und
- eine Kanaloberseite (45), insbesondere eine Oberseite, die im Wesentlichen parallel zum Schalenboden (6) liegt, insbesondere wobei
die Kanalseitenwand (44) einen unteren Abschnitt (44a) aufweist, der vom Schalenboden um einen vertikalen Abstand beabstandet ist, der kleiner als eine Dicke der Zuschnitte (2) ist, und von der zylindrischen Umfangswand (5) um einen seitlichen Abstand beabstandet ist, der zwischen dem Ein- und Zweifachen einer Querabmessung der Zuschnitte (2) liegt, insbesondere einer maximalen Abmessung einer Erstreckungsfläche (3a, 3b) der Zuschnitte (2), und/oder wobei die Umlenkvorrichtung (27) an einem Ende des Kanals (43) angeordnet ist, das sich in der Nähe des Sortierbereichs (12) befindet.

14. Anlage nach einem der Ansprüche 6 bis 13, welche ferner wenigstens eine Dauerbelastungsvorrichtung (46) umfasst, die in der Schale (4), insbesondere außerhalb des Kanals (43), angeordnet und dazu geeignet ist, permanent eine Kraft auf die in einem Belastungsbereich der Schale (47) befindlichen Zuschnitte (2) auszuüben, insbesondere wobei die Dauerbelastungsvorrichtung (46) eine kontinuierlich beschickte Druckluftdüse umfasst.

15. Anlage nach einem der Ansprüche 6 bis 14, welche ferner eine Kontrollvorrichtung (48) umfasst, die dazu ausgebildet ist, auf einer Erstreckungsfläche (3) jeder der zum Schalenausgang (21) geführten und abgegebenen Zuschnitte (2) eine visuelle, physikalische oder chemische Eigenschaft zu erfassen, um zu kontrollieren, dass die Zuschnitte in der gewünschten relativen Ausrichtung (18) liegen.

## Claims

1. Method for the oriented feed of blanks (2), said blanks being of the type extending substantially in an extension plane (Pf) by means of two opposite extension faces (3, 3a, 3b) in a thickness direction (Zf) perpendicular to the extension plane, the two extension faces having different visual, physical or chemical features, wherein:
- a) blanks are provided and a bowl (4) is fed with these blanks,
- b) the blanks are moved one after the other in a feed direction (Da) to a sorting area (12) of the bowl, such that the planes of extension of the blanks are parallel to a feed plane (Pa),
- c) the visual, physical or chemical feature of the extension face (3) of each of the blanks located on the observation side (14) of the feed plane (Pa) is detected on an observation side (14) of the feed plane as the blanks move to the sorting area of the bowl, and it is thus determined whether the blank is in a desired relative orientation (18) in which one of the two extension faces is on the observation side (14) of the feed plane or in a non-desired relative orientation (19) in which the other of the two extension faces is on the observation side (14) of the feed plane,
- d) the blanks (2) in the desired relative orientation (18) are guided to an outlet (21) of the bowl and are removed for further use,
- e) the blanks (2) in the undesired relative orientation (19) are urged in a deflection direction (Dd) of the bowl so as to impart movement to said blanks, **characterised in that**:
- f) the blanks in the non-desired relative orientation (19) are progressively deflected, by means of a deflection device (27) with a ramp (28), out of the feed plane (Pa) in a direction perpendicular to the feed plane (Pa) so as to progressively pivot said blanks, said blanks being in motion so that they fall back into the bowl (4) with possibly the desired relative orientation (18).

2. Method according to claim 1, wherein in order to move the blanks (2) one after the other, a bowl base (6) suitable for receiving the blanks is rotated, in particular wherein the bowl base (6) is rotated about an axis of rotation (Zr) substantially perpendicular to the feed plane (Pa).

3. Method according to any of claims 1 to 2, wherein a blank (2) in the non-desired relative orientation (19) is progressively deflected out of the feed plane by progressively moving one end (2a) of said blank away from the feed plane (Pa), said blank being in motion, in particular the end (2a) of the blank is progressively moved away from the feed plane (Pa) in a direction (Z) perpendicular to the feed plane (Pa) so as to cause said blank to progressively rotate.

4. Method according to any of claims 1 to 3, wherein a blank (2) in the non-desired relative orientation (19) is deflected progressively out of the feed plane (Pa) passing through an intermediate position in which the plane of extension (Pf) of said blank is substantially perpendicular to the feed plane (Pa).

5. Method according to any of claims 1 to 4, wherein blanks (34) to be sorted and surplus blanks (35) are selected in a selection area (36) of the bowl located upstream of the sorting area (12) of the bowl along a feed path (Ta), such that
- the blanks (34) to be sorted are moved one after the other parallel to the feed path (Ta) to the sorting area (12) of the bowl, and
- the surplus blanks (35) are moved to a redirection area (38) of the bowl.

6. Installation (1) for the oriented supply of blanks (2), said blanks being of the type extending substantially in an extension plane (Pf) by means of two extension faces (3, 3a, 3b) opposite one another in a thickness direction (Ef) perpendicular to the extension plane, the two extension faces (3) having different visual, physical or chemical features, including:
- a bowl (4),
- a device for feeding (7) the bowl with blanks,
- a displacement device (8) for moving the blanks (2) one after the other in a feed direction (Da) in a sorting area (12) of the bowl, such that the extension planes (Pf) of the blanks are in the same advancing plane (Pa),
- a detection device (13) capable of detecting, on an observation side (14) of the feed plane (Pa), as the blanks (2) move in the sorting area (12) of the bowl, the visual, physical or chemical feature of the extension face (3) of each of the blanks on the observation side (14) of the feed plane (Pa), so as to determine whether the blank is in a desired relative orientation (18) in which one of the two extension faces is on the observation side of the feed plane or in a non-desired relative orientation (19) in which the other of the two extension faces is on the observation side of the feed plane, in particular a detection device (13) including a proximity sensor (16) for differentiating the visual, physical or chemical features of the two extension faces (3, 3a, 3b) of the blanks, in particular a camera, an optical, inductive, capacitive or magnetic sensor,
- a guiding device (20) for guiding the blanks (2) in the desired relative orientation (18) to an outlet (21) of the bowl and discharging them for further use,
- a biasing device (24) for biasing the blanks (2) in the non-desired relative orientation (19) in a deflection direction (Dd) of the bowl (4), so as to impart movement to said blanks, the biasing device (24) being **characterised in that** it comprises a compressed air nozzle for producing a jet of compressed air to hit the blanks (2) in the proximity of the compressed air nozzle on a peripheral face (3c) of said blanks (2) and **characterised in that**:
- a deflection device (27) having a ramp (28) for progressively deflecting the blanks in the non-desired relative orientation (19) out of the feed plane (Pa) in a direction perpendicular to the feed plane (Pa) so as to progressively pivot said blanks (2), the blanks being in motion so that they fall back into the bowl (4) with possibly the desired relative orientation (18).

7. Installation according to claim 6, further including a control unit (25) communicating with the detection device (13) and at least one of the biasing device (24) and the guiding device (20), the control unit being capable of
- determining, as the blanks (2) move in the sorting area (12) of the bowl, whether a blank is in a desired relative orientation (18) or in a non-desired relative orientation (19), by receiving from the detection device (13) a signal dependent on the visual, physical or chemical feature of the extension face (3) of said blanks on the observation side (14) of the feed plane (Pa),
- if said blank is in the non-desired relative orientation relative (19), controlling the biasing device (24) to bias said blank in the non-desired relative orientation in the bowl deflection direction (Dd) so as to impart movement to said blank (2) and/or
- if said blank is in the desired relative orientation (18), controlling the guiding device (20) to guide said blank (2) to an outlet (21) of the bowl and remove said blank for later use.

8. Installation according to any of claims 6 to 7, wherein the deflection device (27) is a progressively curved ramp (28) having
- a first angle (29) with the feed plane (Pa) at a first end (28a),
- a second angle (30) with the feed plane (Pa) at a second end (28b),
- the first angle (29) being substantially zero and the second angle (30) being greater than the first angle,
- the first end (28a) being closer to the sorting area (12) of the bowl than the second end (28b), according to the deflection direction (Dd),
in particular wherein the second angle (30) of the progressively curved ramp (28) is between the order of ten degrees and the order of eighty degrees, and/or the installation further comprises a second deflection device (31), in particular a second progressively curved ramp (32) spaced apart from the first progressively curved ramp (28).

9. Installation according to any of claims 6 to 8, wherein a deflection device (27, 31) includes at least one air inlet nozzle (50), in particular wherein said at least one air inlet nozzle (50) is arranged on a ramp (28, 32) of the deflection device (27, 31), and/or wherein said at least one air inlet nozzle (50) is arranged in an upper portion (51) of the deflection device (27, 31) extending from one end (28b) of a ramp (28) of the deflection device (27, 31), in particular in an flat upper portion (51) of the deflection device (27, 31).

10. Installation according to any of claims 6 to 9, wherein the bowl includes:
- a cylindrical peripheral wall (5), extending in a vertical axis (Z) from a lower end (5a) to an upper end (5b),
- a bowl bottom (6) arranged at the lower end (5a) of the cylindrical peripheral wall (5) and capable of being driven in rotation relative to the cylindrical peripheral wall (5), about an axis of rotation (Zr) substantially parallel to the vertical axis,
in particular wherein
the bowl bottom (6) is substantially flat and parallel to the feed plane (Pa) and/or
the bowl (4) includes an annular upper wall (9) along the cylindrical peripheral wall (5), said annular upper wall (9) being substantially parallel to the bottom of the bowl (6) and spaced apart from the bottom of the bowl by a vertical spacing distance (De) less than twice a thickness of the blanks (2), so as to define with an annular peripheral area (10) of the bottom of the bowl facing said annular upper wall (9), a peripheral feed channel (11) in which blanks (2) are capable of moving one after the other, the extension planes (3) of the blanks (2) being parallel to the feed plane (Pa), in particular wherein the annular upper wall (9) includes an access opening (17) in the location of the sorting area (12), facing the detection device (13).

11. Installation according to claim 10, wherein the detection device (13), the biasing device (24) and the deflection device (27) are integral with the cylindrical peripheral wall (5).

12. Installation according to any of claims 6 to 11, further including a selection device (33) for selecting blanks to be sorted (34) and surplus blanks (35), arranged in a selection area (36) of the bowl located upstream of the sorting area (12) of the bowl along a feed path (Ta),
- the selection device (33) defining a first open passage (37) between the selection area (33) and a redirection area (38) of the bowl and a second open passage (39) between the selection area (33) and the sorting area (12),
- the surplus blanks (35) being able to be displaced towards the redirection area (38) of the bowl through the first open passage (37),
- the blanks to be sorted (34) being able to be moved one after the other parallel to the feed direction (Ta) towards the sorting area of the bowl through the second open passage (39), in particular wherein
the deflection device (27) is integral with and mounted on the selection device (33) and/or,
the first open passage (37) is defined by a first vertical lateral wall (40) of the selection device (33), and/or
the second open passage (39) is defined by a second vertical lateral wall (42) of the selection device (33) and/or
the first open passage (37) is defined by a first vertical lateral wall (40) of the selection device (33), the second open passage (39) is defined by a second vertical lateral wall (42) of the selection device (33) and
the first vertical lateral wall (40) of the selection device (33) forms an acute angle (A) with the second vertical lateral wall (42) of the selection device (33), in particular an angle (A) greater than five degrees.

13. Installation according to claim 12, wherein the selection device (33) includes a closed guiding channel (43) for blanks connecting the second open passage (39) of the selection area (33) to the sorting area (12) so as to isolate the blanks (34) to be sorted in the bowl between the selection area (33) and the sorting area (12), in particular wherein
the channel (43) extends over at least a third of a circumference of the bowl (4) preferably about half of a circumference of the bowl (4) and/or
wherein the bowl includes
- a cylindrical peripheral wall (5) extending in a vertical axis (Z) from a lower end (5a) to an upper end (5b),
- a bottom of the bowl (6) arranged at the lower end (5a) of the cylindrical peripheral wall (5) and capable of being driven in rotation relative to the cylindrical peripheral wall (5) about an axis of rotation (Zr) substantially parallel to the vertical axis, the channel (43) being delimited transversally by
- a portion of channel (41) of the cylindrical peripheral wall (5),
- a lateral wall of the channel (44) in particular having at least one portion (44a) substantially parallel to the channel portion (41) and
- an upper face of the channel (45), in particular an upper face substantially parallel to the bottom of the bowl (6), in particular wherein the lateral wall of the channel (44) includes a lower portion (44a) spaced apart from the bottom of the bowl by a vertical spacing distance less than a thickness of the blanks (2) and spaced apart from the cylindrical peripheral wall (5) by a lateral spacing distance between one and two times a transverse dimension of the blanks (2), in particular a maximum dimension of an extension face (3a, 3b) of the blanks (2) and/or
the deflection device (27) is arranged at one end of the channel (43) located in the proximity of the sorting area (12).

14. Installation according to any of claims 6 to 13, further including at least one continuous biasing device (46) arranged in the bowl (4), in particular outside of the channel (43) and capable of applying a permanent force to the blanks (2) located in a biasing area of the bowl (47), in particular in which the continuous biasing device (46) comprises a continuously fed compressed air nozzle.

15. Installation according to any of claims 6 to 14, further including a control device (48) for detecting a visual, physical or chemical feature on an extension face (3) of each of the blanks (2) guided towards the outlet (21) of the bowl and discharged, so as to check that said blanks are in the desired relative orientation (18).
